# EUROPEAN PATENT APPLICATION

(11) **EP 4 568 335 A1**
(43) Date of publication of application: **11.06.2025**
(21) Application number: 23849720.0
(22) Date of filing: 15.05.2023
(51) Int. Cl.: H04W 24/10

(54) **TERMINAL, BASE STATION, AND COMMUNICATION METHOD**

(30) Priority: 03.08.2022 JP 2022124290
(71) Applicant: Panasonic Intellectual Property Corporation of America, Torrance, CA 90504 (US)
(72) Inventor: INOUE, Tomohiro, Kadoma-shi, Osaka 571-0057 (JP); NUNOME, Tomoya, Kadoma-shi, Osaka 571-0057 (JP); IWAI, Takashi, Kadoma-shi, Osaka 571-0057 (JP); SUZUKI, Hidetoshi, Kadoma-shi, Osaka 571-0057 (JP); MAKI, Shotaro, Kadoma-shi, Osaka 571-0057 (JP)
(74) Representative: Grünecker Patent- und Rechtsanwälte PartG mbB
(86) International application number: PCT/JP2023/018163
(87) International publication number: WO 2024/029157

(57) **Abstract**

This terminal comprises: a control circuit that determines, on the basis of the configuration of a measured reference signal, at least one of the contents and the number of measurement values included in a report field of the measurement with respect to the reference signal; and a transmission circuit that transmits, on the basis of the determined at least one of the number and contents, a signal including the measurement values.

## Description

### Technical Field

The present disclosure relates to a terminal, a base station, and a communication method.

### Background Art

The specification of a physical layer for Release 17 new radio access technology (NR) has been completed as functional extension of the 5th generation mobile communication systems (5G) in the 3rd generation partnership project (3GPP). NR supports functions for realizing Ultra Reliable and Low Latency Communication (URLLC) in addition to enhanced Mobile Broadband (eMBB) to meet requirements such as high speed and large capacity (see, e.g., Non Patent Literature (hereinafter, referred to as NPL) 1 to NPL 6).

### Citation List

### Non-Patent Literature

NPL 1
   3GPP TS 38.211 V17.2.0, "NR; Physical channels and modulation (Release 17)," June 2022
NPL 2
   3GPP TS 38.212 V17.2.0, "NR; Multiplexing and channel coding (Release 17)," June 2022
NPL 3
   3GPP TS 38.213 V17.2.0, "NR; Physical layer procedure for control (Release 17)," June 2022
NPL 4
   3GPP TS 38.214 V17.2.0, "NR; Physical layer procedures for data (Release 17)," June 2022
NPL 5
   3GPP TS 38.215 V17.1.0, "NR; Physical layer measurements (Release 17)," June 2022
NPL 6
   3GPP TS 38.331 V17.1.0, "NR; Radio Resource Control (RRC) protocol specification (Release 17)", June 2022
NPL 7
   R1-2205520, "Summary #2 of [109-e-R18-Duplex-03] Email discussion on subband non-overlapping full duplex", 3GPP TSG-RAN WG1 Meeting#109-e

### Summary of Invention

However, there is scope for further study on a method for reporting interference between terminals.

A non-limiting embodiment of the present disclosure facilitates providing a terminal, a base station, and a communication method each capable of appropriately reporting interference between terminals.

A terminal according to an embodiment of the present disclosure includes: control circuitry, which, in operation, determines, based on a configuration of a reference signal to be measured, at least one of a number of measurements and/or a content of a measurement, the measurements and the measurement being included in a report field of measurement of the reference signal; and transmission circuitry, which, in operation, transmits a signal including at least one of the measurements based on at least one of the determined number and content.

It should be noted that general or specific embodiments may be implemented as a system, a method, an integrated circuit, a computer program, a storage medium, or any selective combination thereof.

According to an embodiment of the present disclosure, interference between terminals can be appropriately reported.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating exemplary subband non-overlapping full duplex (SBFD);
FIG. 2 is a diagram illustrating exemplary measurement and reporting of Sounding Reference Signal (SRS)-Reference Signal Received Power (RSRP);
FIG. 3 is a diagram illustrating an exemplary Report field of L1-RSRP;
FIG. 4 is a diagram illustrating exemplary Cross-Link Interference (CLI) between terminals;
FIG. 5 is a diagram illustrating an exemplary Channel State Information (CSI) report-based SRS-RSRP report;
FIG. 6 is a block diagram illustrating an exemplary configuration of a part of a base station;
FIG. 7 is a block diagram illustrating an exemplary configuration of a part of a terminal;
FIG. 8 is a block diagram illustrating an exemplary configuration of the base station;
FIG. 9 is a block diagram illustrating an exemplary configuration of the terminal;
FIG. 10 is a sequence diagram illustrating exemplary operations of the base station and the terminal;
FIG. 11 is a diagram illustrating an exemplary Report field;
FIG. 12 is a diagram illustrating another exemplary Report field;
FIG. 13 is a diagram illustrating still another exemplary Report field;
FIG. 14 is a diagram illustrating still another exemplary Report field;
FIG. 15 is a diagram illustrating still another exemplary Report field;
FIG. 16 illustrates an exemplary architecture for a 3GPP NR system;
FIG. 17 schematically illustrates a functional split between Next Generation - Radio Access Network (NG-RAN) and 5th Generation Core (5GC);
FIG. 18 is a sequence diagram of a Radio Resource Control (RRC) connection setup/reconfiguration procedure;
FIG. 19 schematically illustrates usage scenarios of enhanced Mobile BroadBand (eMBB) massive Machine Type Communications (mMTC), and Ultra Reliable and Low Latency Communications (URLLC); and
FIG. 20 is a block diagram illustrating an exemplary 5G system architecture for a non-roaming scenario.

### Description of Embodiments

Hereinafter, embodiments of the present disclosure will be described in detail with reference to the accompanying drawings.

### [Regarding subband non-overlapping full duplex (SBFD)]

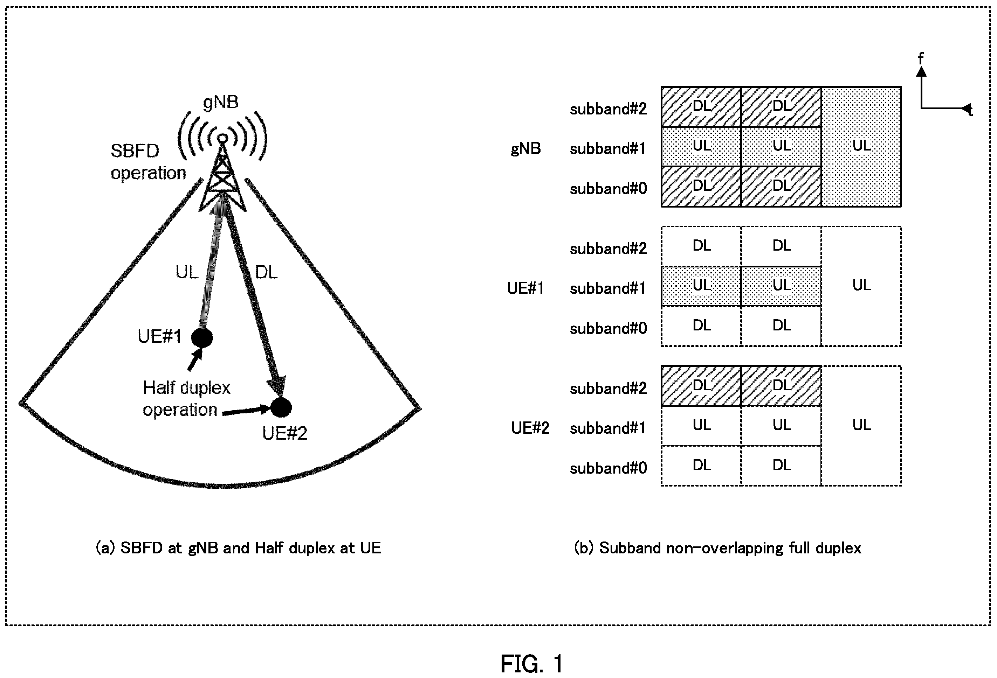

In Release 18, subband non-overlapping full duplex (SBFD) is discussed. FIG. 1 illustrates exemplary SBFD.

In FIG. 1, (a) illustrates exemplary operations of a base station (also referred to as gNB) and terminals (also referred to as User Equipments (UEs) (e.g., UE#1 and UE#2) in the same cell in an SBFD scenario. In the SBFD scenario, the base station performs an SBFD operation, and the terminals perform Half duplex operations.

In FIG. 1, (b) illustrates exemplary allocation of subbands in SBFD. In (b) of FIG. 1, the vertical axis represents frequency, and the horizontal axis represents time. In (b) of FIG. 1, the "UL" refers to Uplink transmission, and the "DL" refers to Downlink transmission. In addition, resources that are not used in each device (e.g., gNB, UE#1, and UE#2) are indicated by dotted lines.

As illustrated in (b) of FIG. 1, in SBFD, a frequency resource (frequency band) is divided into a plurality of subbands (or also referred to as a band, RB set, or sub Bandwidth part (BWP)), and transmissions in different directions in a subband unit are supported. As illustrated in (b) of FIG. 1, the base station can perform transmission and reception (e.g., SBFD operation) in the uplink and the downlink simultaneously, and the terminal can perform transmission and reception (e.g., Half duplex operation) in either the uplink or downlink in a certain time resource. For example, in (b) of FIG. 1, UE#1 communicates with the base station in the uplink and UE#2 communicates with the base station in the downlink in the same time resource.

### [Regarding Interference]

In a case where the base station performs an SBFD operation and the terminals perform Half duplex operations as illustrated in (a) of FIG. 1, various interference possibly occurs. For example, self-interference in a base station or Cross-Link Interference (CLI) between terminals possibly occurs. The self-interference in the base station and the CLI between terminals greatly deteriorate the reception characteristic, and thus countermeasures are required (e.g., see NPL 7). For example, it is expected to take measures against CLI between terminals in resources of a limited number of terminals. Thus, a method for measuring CLI between terminals needs to be studied.

One way to measure CLI between terminals in the existing standard is SRS-RSRP (Sounding Reference Signal (SRS), Reference Signal Received Power (RSRP)) /CLI-RSSI (Received Signal Strength Indicator (RSSI)). The SRS-RSRP/CLI-RSSI is CLI measurement and reporting between layer 3-based terminals, and is supported in Release 16.

The SRS-RSRP is a measurement of the reception power of an SRS transmitted from another terminal.

The CLI-RSSI is a measurement of a linear average of the total reception power of the resource configured for the terminal to measure.

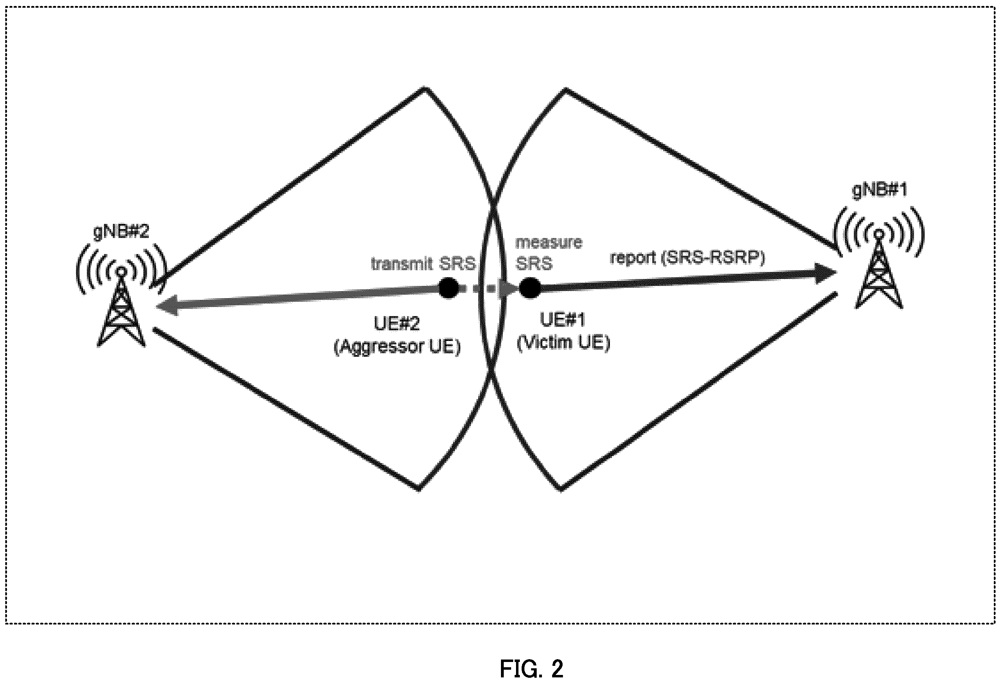

FIG. 2 is a diagram illustrating exemplary use of layer 3-based SRS-RSRP. In the layer 3-based SRS-RSRP, for example, CLI between terminals (UE#1 and UE#2 in FIG. 2) belonging to different base stations (gNB#1 and gNB#2 in FIG. 2) is measured and reported. For example, one terminal transmits an SRS, and the other terminal receives the SRS, measures RSRP, and reports. In the example illustrated in FIG. 2, UE#2 transmits an SRS to gNB#2. Further, in the example illustrated in FIG. 2, UE#1 receives the SRS transmitted from UE#2, measures SRS-RSRP, and reports the measured SRS-RSRP to gNB#1.

Here, a method for reporting CLI between terminals in an SBFD scenario has not been sufficiently studied.

In one non-limiting embodiment of the present disclosure, a method for reporting CLI between terminals in an SBFD scenario will be described.

[Regarding CSI Reports and Report field]

A description will be given of an exemplary "Report field" that constitutes a measurement reported by a terminal.

The existing layer 1-based reporting methods include a Channel State Information (CSI) report.

In the CSI report, for example, a terminal measures a value such as channel quality information (e.g., Channel Quality Information (CQI)), a transmission rank, and L1-RSRP (L1: layer 1) using at least one of a CSI-Reference Signal (CSI-RS) and a Synchronization Signal Block (SSB) transmitted from a base station to the terminal, and transmits a report including the measured value to the base station.

In the CSI report, the base station configures, for the terminal that measures, an operation for a report in a time domain (e.g., operation of periodic, semi-persistent, or aperiodic reporting), a report configuration for setting a value to be reported, and a resource configuration including information on a resource to be measured.

The terminal, for example, quantizes the measurement and configures (or stores, places) the measurement in a Report field. A Report field is associated with a report number that identifies each of a plurality of reports to be reported. For example, an Uplink Control Information (UCI) bit sequence corresponds to a plurality of report numbers to be reported by the terminal.

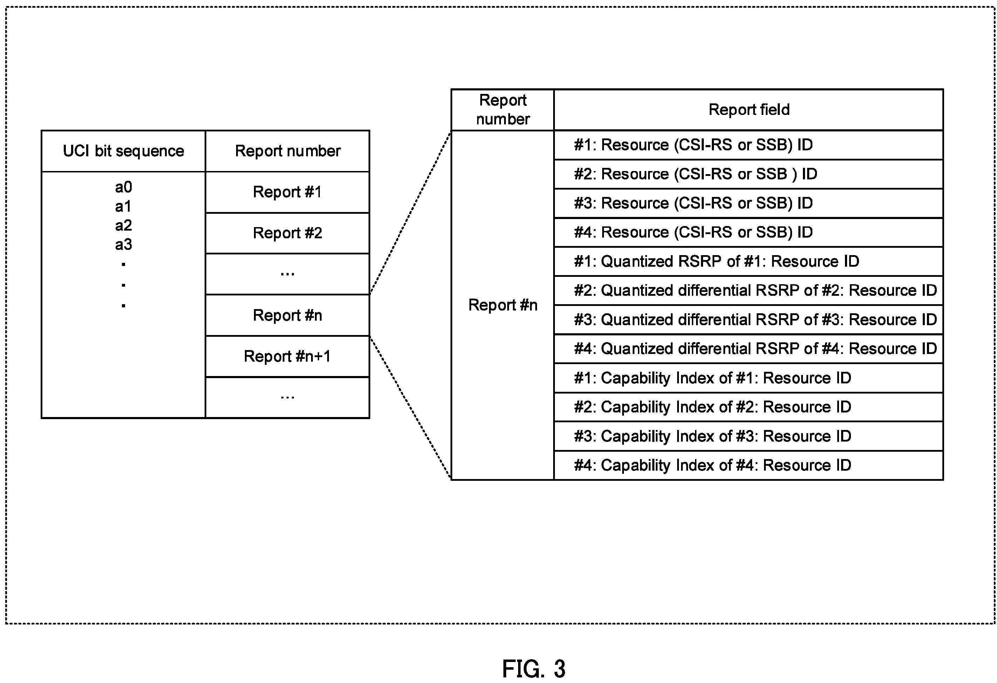

FIG. 3 illustrates an exemplary configuration of a Report field of L1-RSRP. The Report field may include a "resource ID (e.g., Resource (CSI-RS or SSB) ID)" identifying a resource to be measured, a "quantized measurement (e.g., quantized RSRP or quantized differential RSRP)" corresponding to the resource to be measured, and a "Capability Index" identifying Capability corresponding to the resource to be measured. In the example shown in FIG. 3, the maximum number of measurements (or resources) to be reported in each Report field is four, and the measurements may be arranged in descending order in the Report field. Further, in the quantized measurements, quantized differential RSRP indicates a value obtained by quantizing the difference between RSRP of each resource and the largest RSRP. For example, as the number of quantized bits of the L1-RSRP measurement, seven bits may be assigned to the quantized RSRP, and four bits may be assigned to the quantized differential RSRP.

### [Regarding Configuration of SRS resource and SRS resource set]

The configurations of SRS resource and SRS resource set will be described.

The SRS resource set defines a plurality of SRS resources. For example, a parameter such as an SRS resource set ID, usage of SRS resource, or power control may be defined for each SRS resource set.

Further, for example, for each SRS resource, a parameter such as information on resource mapping (e.g., symbol mapping or transmission frequency band to which an SRS resource is allocated), a multiplex parameter (e.g., cyclic shift or frequency multiplexing), or an antenna port may be defined.

For example, for the usage defined in the SRS resource set, {codebook, nonCodebook, antennaSwitching, beamManagement} can be configured. For example, the codebook and nonCodebook may be configured in a case where an SRS is used to estimate uplink CSI, the antennaSwitching may be configured in a case where an SRS is used to estimate downlink CSI, and the beamManagement may be configured in a case where an SRS is used to establish a transmission/receive beam pair by uplink.

Further, for example, for the antenna port defined for the SRS resource, {port1, port2, port4} can be configured. For example, in a case where port2 is configured for the antenna port, the terminal that transmits an SRS transmits the SRS resource using two antenna ports.

Note that the types and values of the parameters defined in the SRS resource set and SRS resource are not limited to the above-described examples.

### [Measurement of CLI between Terminals in SBFD scenario]

In an SBFD scenario, a base station can transmit and receive in uplink and downlink simultaneously, and thus CLI possibly occurs between terminals.

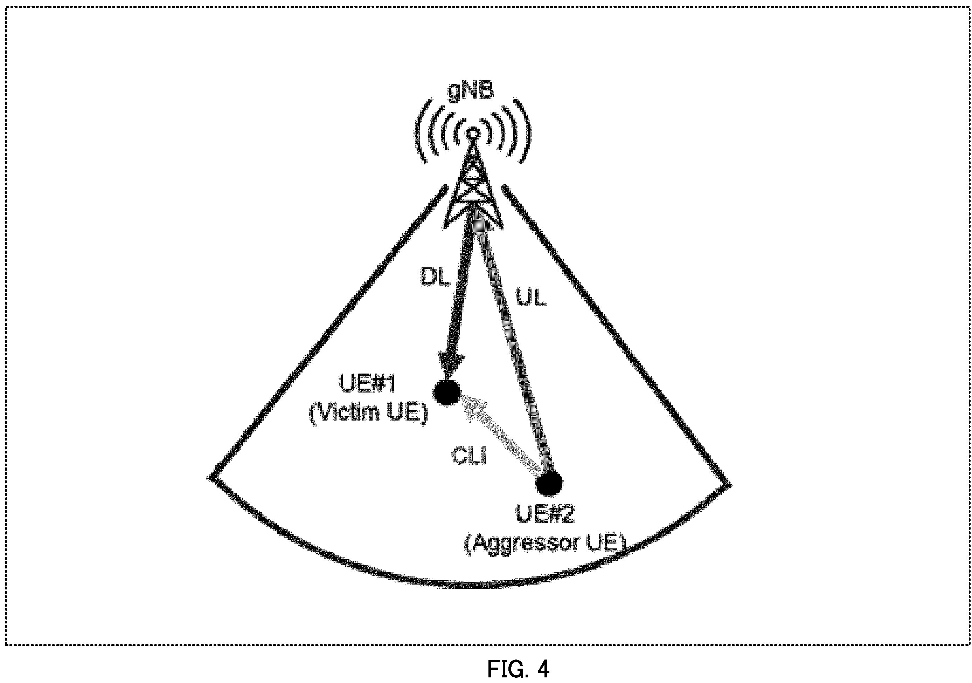

FIG. 4 illustrates exemplary CLI between terminals.

For example, CLI between terminals may occur when different terminals communicate with a base station in different directions. For example, in FIG. 4, in the same time resource, UE#1 communicates with gNB in the downlink (DL) and UE#2 communicates with gNB in the uplink (UL). In this case, CLI from UE#2 to UE#1 may occur. Here, the term "Victim UE" refers to a terminal that receives interference (UE#1 in FIG. 4), and the term "Aggressor UE" refer to a terminal that gives interference (UE#2 in FIG. 4).

For example, in a case where DL and UL are respectively assigned to neighboring subbands, the DL reception characteristic may deteriorate due to interference spillover from UL. CLI between terminals depends on the transmission power of the terminal that gives interference or the positions of the terminal that receives interference and the terminal that gives interference.

Here, the base station cannot grasp the positions of the terminals in detail, which makes it difficult for the terminal to estimate the CLI between terminals. Thus, SRS-RSRP or CLI-RSSI in which terminals measure interference between terminals can be effectively used in the SBFD scenario.

In a case where a terminal measures CLI between terminals and reports it to a base station, the reported measurement (or observed value) of the CLI is useful for scheduling in the base station. For example, the base station can perform scheduling without allocating terminals with high reported CLI measurements (e.g., terminals with large interference) at the same time. Further, for example, the base station can schedule terminals with low reported CLI measurements (e.g., terminals with small interference) at the same time.

Furthermore, in a case where CLI between terminals is measured, the overhead of the CLI measurement reporting increases as the number of terminals present in the cell increases. For example, the base station can estimate the position of a terminal to some extent by the direction of beam for the terminal, the timing advance, or the like, and thus the base station may configure the limitation on the terminal that measures CLI.

### [CSI report-based SRS-RSRP report]

A CSI report-based SRS-RSRP report in an SBFD scenario is described as an example.

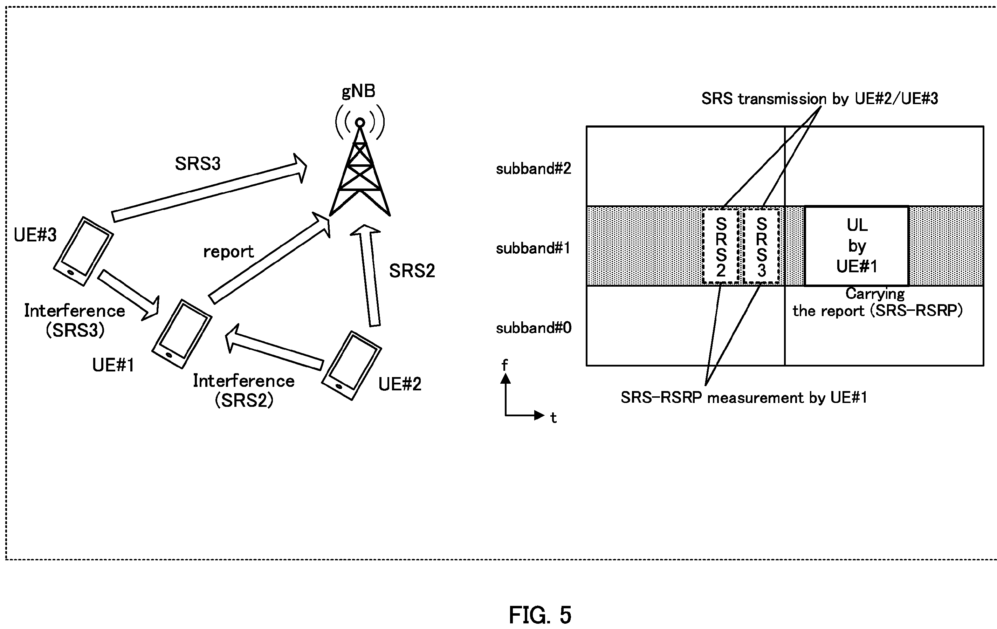

FIG. 5 illustrates an exemplary CSI report-based SRS-RSRP report. The left diagram in FIG. 5 illustrates the status of terminals (e.g., UE#1, UE#2 and UE#3) and a base station (e.g., gNB), and the right diagram in FIG. 5 illustrates exemplary resource allocation in SBFD. In the right diagram of FIG. 5, subband#0 and subband#2 are downlink subbands, and subband#1 is an uplink subband.

In the example of FIG. 5, UE#2 and UE#3 transmit SRSs in subband#1. Further, UE#1 measures CLI between terminals using the SRSs (or SRS resources) transmitted from UE#2 and UE#3. For example, UE#1 may measure SRS-RSRP corresponding to the CLI from UE#2 to UE#1 (or UE#3 to UE#1). UE#1 reports the measurement of the SRS-RSRP to the base station in subband#1.

In the CSI report-based SRS-RSRP report, a report configuration and a resource configuration of a CSI report can be reused as they are. The report configuration is a configuration related to a report of a terminal that measures SRS-RSRP, and the resource configuration is a configuration related to an SRS to be measured (e.g., SRS resource set or the like).

On the other hand, a Report field having a function of generating an uplink control information (UCI) bit sequence of an SRS-RSRP report needs to be changed. For example, an SRS resource set-based report or a Report field considering SRS resource and SRS resource set configurations (e.g., usage or antenna port) can be a useful report for scheduling by a base station. For example, by the terminal reporting, to the base station, a Report field considering the usage of SRS transmission, the base station can perform SRS processing including SRS-RSRP between terminals.

### [Overview of Communication System]

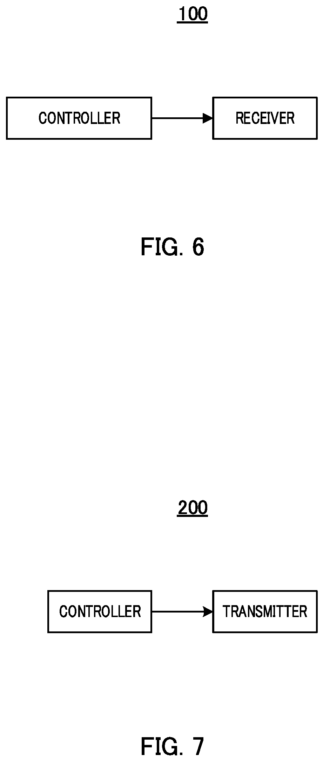

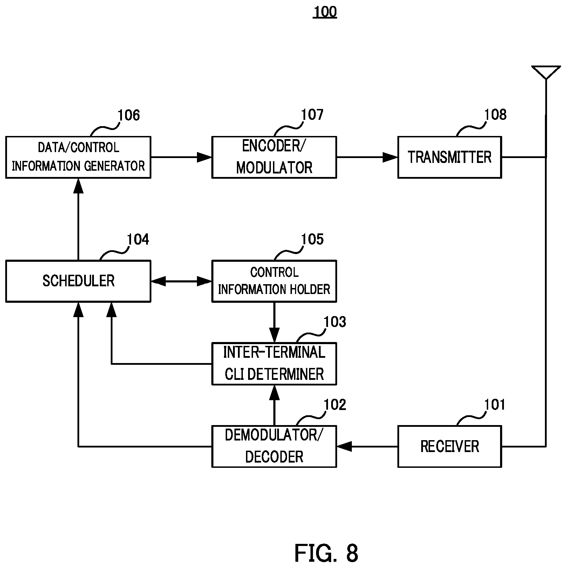

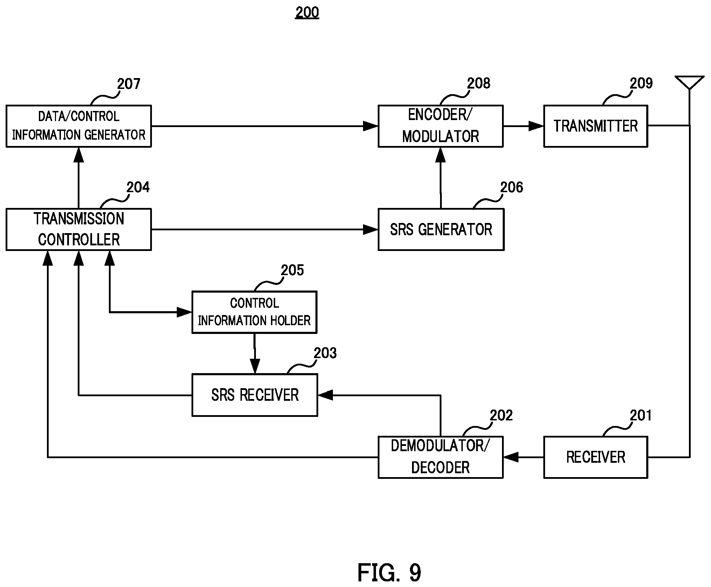

A communication system according to an aspect of the present disclosure may include, for example, base station 100 (e.g., gNB) illustrated in FIGS. 6 and 8, and terminal 200 (e.g., UE) illustrated in FIGS. 7 and 9. A plurality of base stations 100 and a plurality of terminals 200 may be included in the communication system.

FIG. 6 is a block diagram illustrating an exemplary configuration of a part of base station 100 according to an aspect of the present disclosure. In base station 100 illustrated in FIG. 6, a controller (e.g., corresponding to control circuitry) determines, based on the configuration of a reference signal (e.g., SRS) measured by terminal 200, at least one of the number and contents of measurements included in a Report field of measurement of the reference signal (e.g., SRS-RSRP). A receiver (e.g., corresponding to reception circuitry) receives a signal including the measurements based on at least one of the determined number or contents.

FIG. 7 is a block diagram illustrating an exemplary configuration of a part of terminal 200 according to an aspect of the present disclosure. In terminal 200 illustrated in FIG. 7, a controller (e.g., corresponding to control circuitry) determines, based on the configuration of a reference signal (e.g., SRS) to be measured, at least one of the number and contents of measurements included in a Report field of measurement of the reference signal (e.g., SRS-RSRP). A transmitter (e.g., transmission circuitry) transmits a signal including the measurements based on at least one of the determined number and contents.

### [Configuration of Base Station]

FIG. 8 is a block diagram illustrating an exemplary configuration of base station 100 according to an aspect of the present disclosure. In FIG. 8, base station 100 includes receiver 101, demodulator/decoder 102, inter-terminal CLI determiner 103, scheduler 104, control information holder 105, data/control information generator 106, encoder/modulator 107, and transmitter 108.

Note that, for example, at least one of demodulator/decoder 102, inter-terminal CLI determiner 103, scheduler 104, control information holder 105, data/control information generator 106, and encoder/modulator 107 may be included in the controller illustrated in FIG. 6, and receiver 101 may be included in the receiver illustrated in FIG. 6.

Receiver 101, for example, performs reception processing such as down-conversion or A/D conversion on the received signal received via the antenna, and outputs the received signal after the reception processing to demodulator/decoder 102.

Demodulator/decoder 102, for example, demodulates and decodes the received signal input from receiver 101 and outputs the decoding result to scheduler 104. Further, in a case where SRS-RSRP report information is included in the decoding result, demodulator/decoder 102 outputs the report information to inter-terminal CLI determiner 103.

Inter-terminal CLI determiner 103 may determine CLI between terminals based on the SRS-RSRP report information input from demodulator/decoder 102 and control information input from control information holder 105, and may specify a combination of terminals having strong CLI between terminals (e.g., terminals having CLI equal to or greater than a threshold value) or a combination of terminals having weak CLI between terminals (e.g., terminals having CLI less than the threshold value). Inter-terminal CLI determiner 103 outputs the information on the specified combination of terminals to scheduler 104.

Scheduler 104 may perform scheduling for terminal 200, for example. For example, scheduler 104 performs scheduling of transmission and reception of each terminal 200 based on at least one of the decoding result input from demodulator/decoder 102, the information on the combination of terminals input from inter-terminal CLI determiner 103, and the control information input from control information holder 105, and indicate, to data/control information generator 106, generation of at least one of data and control information. Further, for example, based on the control information input from control information holder 105, scheduler 104 may indicate, to data/control information generator 106, generation of configuration information of SRS transmission and configuration information of SRS measurement (e.g., resource configuration and report configuration of SRS-RSRP report), and indicate SRS measurement to inter-terminal CLI determiner 103.

Control information holder 105 holds control information configured for each terminal 200. The control information may include information such as the configuration of SRS (e.g., information on SRS assigned to terminal 200), the configuration of SRS-RSRP report, or past measurements of SRS-RSRP, for example. Control information holder 105 may output the held information to each component (e.g., inter-terminal CLI determiner 103 and scheduler 104) of base station 100 as needed, for example.

Data/control information generator 106, for example, generates at least one of data and control information in accordance with the indication from scheduler 104 and outputs a signal including the generated data or control information to encoder/modulator 107. Note that the generated data and control information may, for example, include at least one of higher layer signaling information and downlink control information.

Encoder/modulator 107 encodes and modulates the signal input from data/control information generator 106 and outputs the modulated signal to transmitter 108.

Transmitter 108 performs transmission processing such as D/A conversion, up-conversion, or amplification on the signal input from encoder/modulator 107, for example, and transmits a radio signal obtained by the transmission processing to terminal 200 through the antenna.

### [Configuration of Terminal]

FIG. 9 is a block diagram illustrating an exemplary configuration of terminal 200 according to an aspect of the present disclosure. In FIG. 9, terminal 200 includes receiver 201, demodulator/decoder 202, SRS receiver 203, transmission controller 204, control information holder 205, SRS generator 206, data/control information generator 207, encoder/modulator 208, and transmitter 209.

Note that at least one of demodulator/decoder 202, SRS receiver 203, transmission controller 204, control information holder 205, SRS generator 206, data/control information generator 207, and encoder/modulator 208 may be included in the controller illustrated in FIG. 7, and transmitter 209 may be included in the transmitter illustrated in FIG. 7.

For example, receiver 201 performs reception processing such as down-conversion or A/D conversion on the received signal received via the antenna, and outputs the received signal after the reception processing to demodulator/decoder 202.

For example, demodulator/decoder 202 demodulates and decodes a received signal input from receiver 201, and outputs the decoding result to transmission controller 204. The decoding result may include, for example, higher layer signaling information and downlink control information. Further, in a case where the decoding result includes an SRS to be measured, demodulator/decoder 202 outputs the result to SRS receiver 203.

SRS receiver 203 extracts an SRS from the decoding result input from demodulator/decoder 202. For example, SRS receiver 203 measures the SRS based on the control information input from control information holder 205 (e.g., information such as resource configuration and report configuration of SRS-RSRP report) and the extracted SRS, and outputs the quantized measurement to transmission controller 204, for example.

Transmission controller 204 outputs the signaling information (e.g., resource configuration information and report configuration information of SRS-RSRP report and configuration related to SRS transmission) included in the decoding result input from demodulator/decoder 202 to control information holder 205. Further, transmission controller 204 may indicate, to data/control information generator 207, generation of at least one of data and control information, based on the control information input from control information holder 205 (e.g., information on resource configuration and report configuration of SRS-RSRP report) or the decoding result input from demodulator/decoder 202 (e.g., downlink control information). Further, transmission controller 204 outputs the measurement of SRS to data/control information generator 207 based on the information input from SRS receiver 203. Furthermore, transmission controller 204 may indicate generation of SRS to SRS generator 206 based on the configuration related to SRS transmission input from control information holder 205 or the downlink control information input from demodulator/decoder 202.

Control information holder 205, for example, holds the control information input from transmission controller 204 (e.g., resource configuration and report configuration of SRS-RSRP report and configuration related to SRS transmission), and outputs the held information to each component (e.g., SRS receiver 203 and transmission controller 204) as needed.

SRS generator 206, for example, generates a code sequence for SRS based on signaling information on SRS transmission input from transmission controller 204. SRS generator 206, for example, outputs the generated code sequence as an SRS to encoder/modulator 208.

For example, data/control information generator 207 generates data or control information in accordance with the indication from transmission controller 204 and outputs a signal including the generated data or control information to encoder/modulator 208.

Encoder/modulator 208, for example, encodes and modulates the signal input from data/control information generator 207 and the signal input from SRS generator 206, and outputs the modulated transmission signal to transmitter 209.

Transmitter 209 performs transmission processing such as D/A conversion, up-conversion, or amplification on the signal input from encoder/modulator 208, for example, and transmits a radio signal obtained by the transmission processing to base station 100 through the antenna.

### [Operations of Base Station 100 and Terminal 200]

Exemplary operations of base station 100 and terminal 200 having the above configurations will be described.

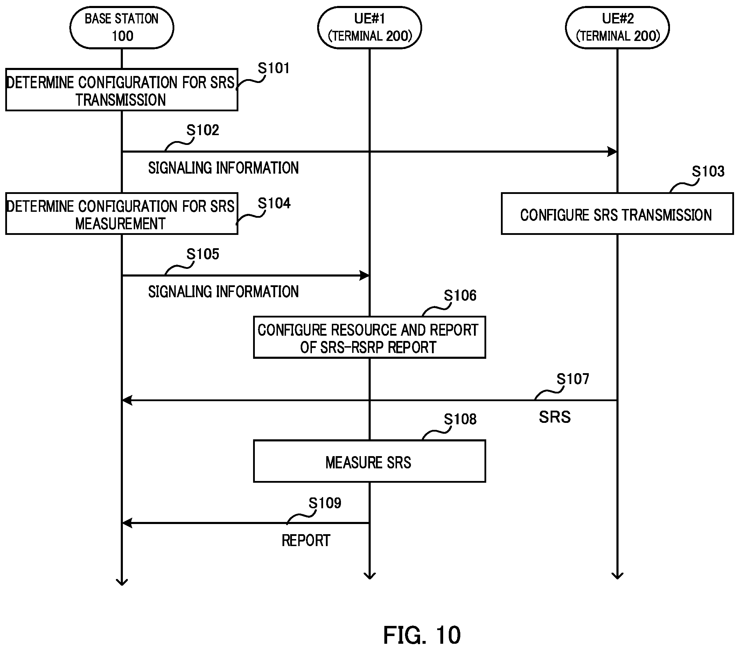

FIG. 10 is a sequence diagram illustrating exemplary operations of base station 100 and terminal 200. In FIG. 10, for example, UE#1 (terminal 200) performs SRS measurement using an SRS transmitted from UE#2, and reports an SRS-RSRP report to base station 100.

In FIG. 10, base station 100 determines a configuration related to SRS transmission (S101). Base station 100 transmits, to UE#2, higher layer signaling information including the determined configuration information related to SRS transmission (S102).

UE#2 configures an SRS transmission based on the configuration information from base station 100 (S103).

Base station 100, for example, determines a configuration related to SRS measurement (S104). Base station 100 transmits, to UE#1, higher layer signaling information including the determined configuration information related to SRS measurement (S105).

UE#1 configures the resource and the report of an SRS-RSRP report based on the configuration information from base station 100 (S106).

For example, UE#2 transmits the configured SRS to base station 100 (S107).

At this time, UE#1 receives the SRS transmitted by UE#2 to base station 100 and measures the SRS (S108). UE#1 transmits a signal (e.g., PUCCH or PUSCH) including the SRS-RSRP report to base station 100 based on the SRS-RSRP report configuration and the SRS measurement result (S109).

Base station 100 may, for example, schedule terminals 200 including UE#1 and UE#2 based on at least one of the result of measuring SRS transmitted from UE#2 and the SRS-RSRP report transmitted from UE#1 (not illustrated).

### [Method for configuring Report field]

Next, an exemplary method for configuring a Report field in terminal 200 (e.g., SRS receiver 203 and transmission controller 204) will be described. Terminal 200 determines, for example, at least one of the number and the contents of measurements (e.g., SRS-RSRP) included in the Report field for the measurement of SRS, based on the configuration of SRS to be measured (e.g., configuration of SRS resource set or SRS resource).

Hereinafter, configuration methods 1 to 3 for a Report field are described.

### <Configuration Method 1>

In configuration method 1, each Report field corresponds to one SRS resource set. Further, a Report field is composed of SRS-RSRPs of a plurality of (e.g., all) SRS resources constituting one SRS resource set corresponding to the Report field.

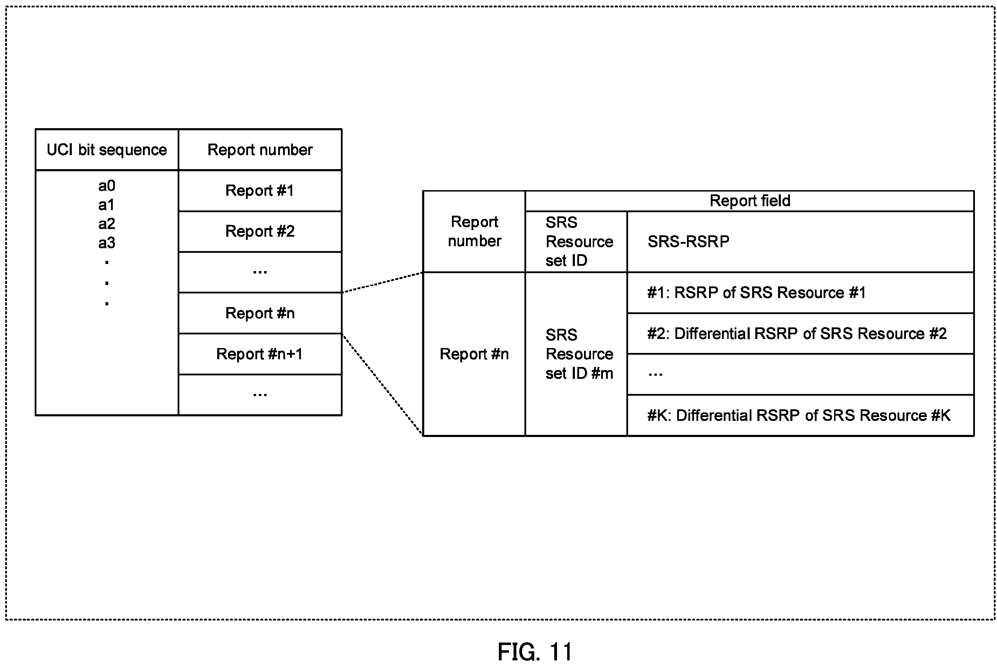

FIG. 11 illustrates an exemplary configuration of a Report field of configuration method 1.

An uplink control information (UCI) bit sequence is composed of a plurality of reports. Further, for example, a report number may be assigned in ascending order for each report.

A Report field indicates a bit field of each report. In FIG. 11, each Report field (e.g., Report #n) is associated with one SRS resource set ID (e.g., SRS Resource set ID #m).

Terminal 200 measures all (e.g., K) SRS resources constituting an SRS resource set corresponding to each Report field and quantizes the measurements (e.g., SRS-RSRPs), for example. In the quantization, a quantization table of n1 bits (n1: number of bits of the table obtained from a range and a step size) and a quantization differential table of n2 bits (n2: number of bits of the table obtained from a range and a step size) may be defined, for example. Terminal 200 may convert the measurements into quantized values using the quantization table and the quantization differential table, for example.

At this time, as illustrated in FIG. 11, the first column of the Report field may store quantized SRS-RSRP of the SRS resource for which the lowest SRS resource ID (e.g., #1) in the SRS resource set is configured. The quantized SRS-RSRP is a value obtained by quantizing the measurement using the quantization table.

Further, as illustrated in FIG. 11, the remaining columns of the Report field (e.g., the second column to the Kth column) may store quantized differential SRS-RSRPs for SRS resources for which SRS resource IDs arranged in ascending order (e.g., #2 to #K) are configured. The quantized differential SRS-RSRPs are each a value obtained by quantizing a difference from the SRS-RSRP in the first column (RSRP corresponding to SRS resource #1) of the Report field by the quantization differential table.

Note that the quantized SRS-RSRP serving as a reference for the quantized differential SRS-RSRPs is not limited to the SRS-RSRP corresponding to the lowest SRS resource ID in the SRS resource set, and may be another SRS-RSRP. For example, the quantized SRS-RSRP may be SRS-RSRP corresponding to an SRS resource ID different from the lowest SRS resource ID, and may be the largest or smallest SRS-RSRP.

As described above, in configuration method 1, the Report field stores SRS-RSRP for each of a plurality of (e.g., all) SRS resources constituting one SRS resource set. For example, the number of SRS resources constituting an SRS resource set may be individually configured for each SRS resource set. In configuration method 1, for example, the configuration of Report field may vary based on the configuration (e.g., the number of SRS resources) of an SRS resource set.

Terminal 200 reports SRS-RSRPs of all SRS resources constituting one SRS resource set corresponding to the Report field to base station 100, for example. In this way, base station 100 can acquire detailed information on CLI between terminals 200. For example, base station 100 can perform scheduling considering CLI between terminals 200, based on the detailed information on CLI between terminals 200. For example, base station 100 can perform scheduling for reducing CLI between terminals, such as by not allocating terminals 200 having strong interference between terminals at the same time, or by allocating terminals 200 having weak interference between terminals at the same time, thereby reducing deterioration of the reception characteristics of terminals 200.

### <Configuration Method 2>

In configuration method 2, each Report field is composed of SRS-RSRPs corresponding to the usage of an SRS resource set. For example, in configuration method 2, the contents of measurements (SRS-RSRPs) included in a Report field may vary depending on the usage (e.g., usage of SRS transmission) of an SRS resource set.

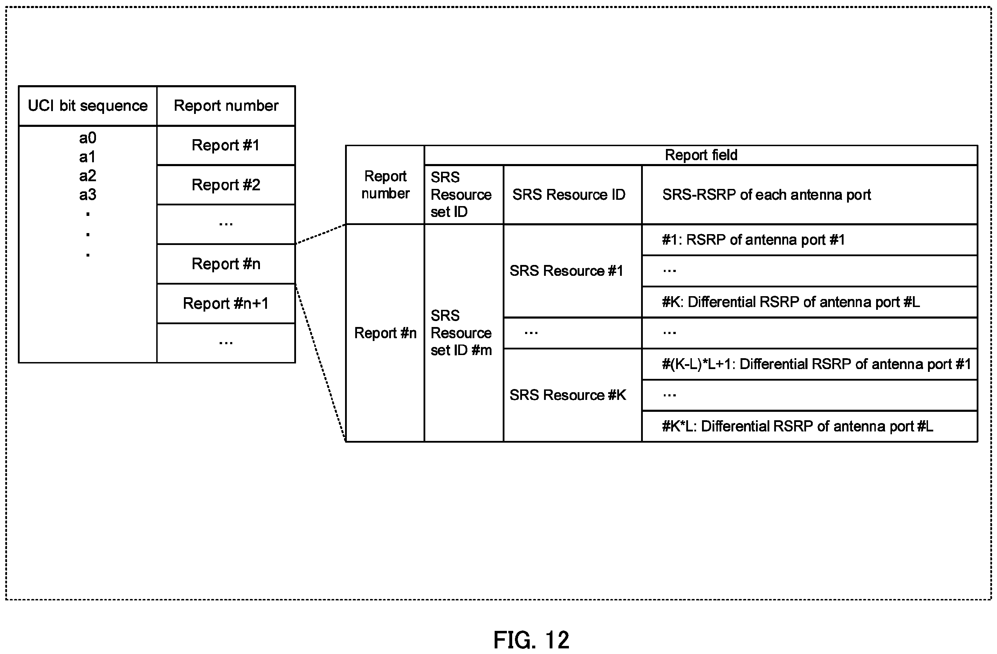

FIG. 12 illustrates an exemplary configuration of a Report field in a case where the usage of SRS resource set (SRS resource set #m) is set to "codebook" in configuration method 2.

An uplink control information (UCI) bit sequence is composed of a plurality of reports. Further, for example, a report number may be assigned in ascending order for each report.

A Report field indicates a bit field of each report. In FIG. 12, each Report field (e.g., Report #n) is associated with one SRS resource set ID (e.g., SRS Resource set ID #m).

Terminal 200 measures SRS-RSRP of each of antenna ports (e.g., L antenna ports) of all (e.g., K) SRS resources constituting an SRS resource set corresponding to each Report field, and quantizes the measurements, for example. For example, as illustrated in FIG. 12, the Report field of Report #m may store a total of K×L SRS-RSRPs for L antenna ports of each of K SRS resources #1 to #K that constitute SRS resource set #m.

Note that, as illustrated in FIG. 12, the first column of the Report field may store quantized SRS-RSRP corresponding to the lowest antenna port ID (e.g., #1) of the SRS resource for which the lowest SRS resource ID (e.g., #1) in the SRS resource set is configured. The quantized SRS-RSRP is a value obtained by quantizing the measurement using the quantization table.

Further, as illustrated in FIG. 12, the remaining columns of the Report field (e.g., the second column to the K*Lth column) may store quantized differential SRS-RSRPs for SRS resources for which SRS resource IDs arranged in ascending order (e.g., #2 to #K) and antenna port IDs arranged in ascending order (e.g., #1 (or #2) to #L) for each SRS resource are configured. The quantized differential SRS-RSRPs are each a value obtained by quantizing a difference from the SRS-RSRP in the first column of the Report field (RSRP corresponding to SRS resource #1 and antenna port #1) by the quantization differential table.

Note that the quantized SRS-RSRP serving as a reference for quantized differential SRS-RSRP is not limited to SRS-RSRP corresponding to the lowest SRS resource ID in the SRS resource set and the lowest antenna port ID, and may be another SRS-RSRP. For example, the quantized SRS-RSRP may be SRS-RSRP corresponding to an SRS resource ID different from the lowest SRS resource ID and an antenna port ID different from the lowest antenna port ID, and may be the largest or smallest SRS-RSRP.

As described above, in configuration method 2, for example, the contents of measurements included in a Report field may be determined based on the configuration of SRS (e.g., usage of SRS resource set).

Terminal 200 reports SRS-RSRP corresponding to the usage of the SRS resource set, for example. This allows base station 100 to perform scheduling considering CLI between terminals when performing transmission and reception control based on the usage of the received SRS (e.g., when the SRS is used for CSI estimation of the uplink in codebook-based SRS transmission).

For example, in a case where the usage is set to codebook, terminal 200 transmits a plurality of SRSs (SRS resources) using a plurality of antenna ports. Base station 100 receives the SRSs of the SRS resources, estimates CSI of the uplink, and selects an optimal SRS resource, transmission rank of the uplink, or precoding based on the CSI estimation result. According to configuration method 2, base station 100 can consider CLI between terminals in addition to CSI between terminal 200 and base station 100 by considering CLI between terminals for each antenna port included in a Report field at the time of the selection of SRS resource, transmission rank of the uplink, and precoding.

Further, for example, by terminal 200 reporting, to base station 100, a Report field varying depending on the usage of SRS, base station 100 can perform scheduling considering CLI when performing scheduling (or control of transmission and reception) based on the usage of SRS.

Note that the usage is set to codebook in configuration method 2, but the usage is not limited to codebook. In a case where the usage is different from codebook, terminal 200 may determine the contents of measurements included in the Report field corresponding to the usage, and report an SRS-RSRP report to base station 100. For example, terminal 200 may apply the Report field configuration of configuration method 2 in a case where the usage is set to codebook, and may apply the Report field configuration of configuration method 1 or configuration method 3 to be described later in a case where the usage is set to a value different from codebook.

### <Configuration Method 3>

In configuration method 3, each Report field corresponds to a plurality of SRS resource sets and is composed of SRS-RSRPs of up to m SRS resources. In configuration method 3, for example, a Report field may store a defined number of m measurements among measurements for a plurality of SRS resources. For example, the contents of measurements included in a Report field may be determined based on the configuration of SRS (e.g., configuration of SRS resource set or SRS resource).

Terminal 200 may measure a plurality of SRS resources, quantize up to m SRS-RSRPs arranged in descending order (or ascending order), and store the quantized SRS-RSRPs in a Report field, for example.

The "m" indicating the number of SRS-RSRPs to be reported may be defined (or specified) in the standard, may be configured in terminal 200 by higher layer signaling, or may be configured (or indicated) to a terminal by downlink control information (e.g., DCI).

Further, the m may be defined as a function of the payload size n of the uplink control information (UCI) bit reported to base station 100. For example, the m and n may vary depending on whether to be transmitted on the uplink data channel (e.g., Physical Uplink Shared Channel (PUSCH)) or the uplink control channel (e.g., Physical Uplink Control Channel (PUCCH).

By limiting the number of SRS-RSRPs constituting a Report field as in configuration method 3, the number of uplink control information (UCI) bits and the number of reports to base station 100 can be reduced. For example, in a case where the number of uplink control information (UCI) bits is limited and all SRS-RSRPs are reported, terminal 200 possibly transmits uplink control information (including SRS-RSRP report) to base station 100 a plurality of times. In response to this, limiting the number of SRS-RSRPs to be reported can reduce the number of reports to base station 100.

Further, by terminal 200 reporting SRS-RSRPs in descending order, base station 100 can identify terminals 200 having strong CLI between terminals, so that base station 100 can perform scheduling without allocating these terminals 200 to the same time resource.

Alternately, by terminal 200 reporting SRS-RSRPs in ascending order, base station 100 can identify terminals 200 having weak CLI between terminals, so that base station 100 can perform scheduling allocating these terminals 200 to the same time resource.

Such scheduling allowing for reduction in interference between terminals can reduce deterioration of the reception characteristic in terminal 200.

Regarding configuration method 3, a method for limiting the number of SRS-RSRPs to be reported will be described.

### <Configuration Method 3-1>

In configuration method 3-1, the Report field is composed of a plurality of SRS-RSRPs, a plurality of SRS resources corresponding to the plurality of SRS-RSRPs, and SRS resource set IDs corresponding to the SRS resource IDs.

Terminal 200 reports up to m SRS-RSRPs in descending (or ascending) order. For example, the Report field may store a defined number of m measurements in descending or ascending order among respective measurements in the plurality of SRS resources included in the plurality of SRS resource sets.

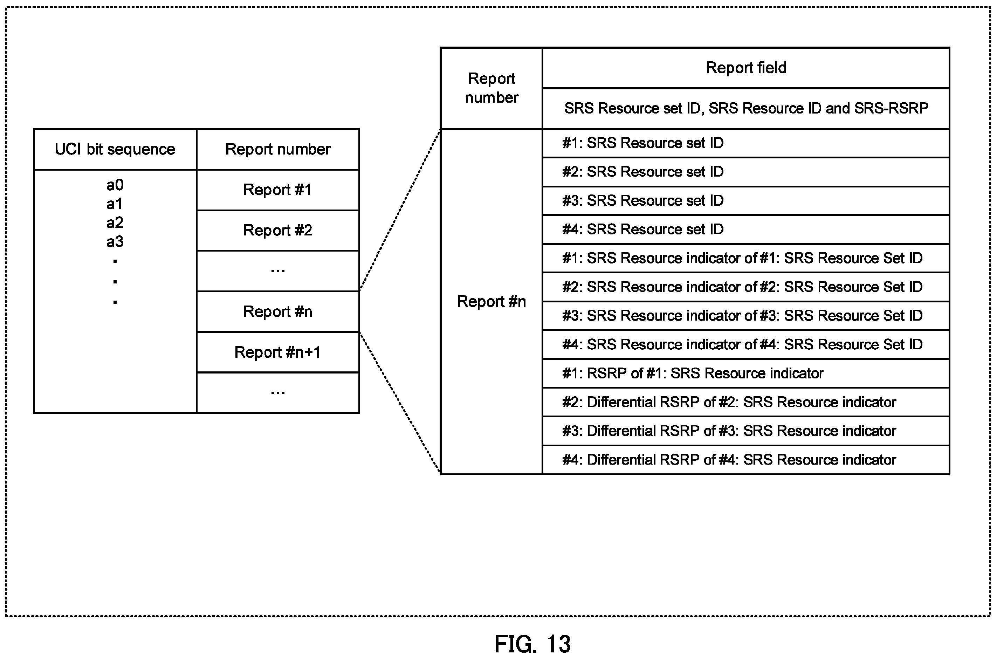

FIG. 13 illustrates an exemplary configuration of a Report field of configuration method 3-1.

An uplink control information (UCI) bit sequence is composed of a plurality of reports. Further, for example, a report number may be assigned in ascending order for each report.

A Report field indicates a bit field of each report. In FIG. 13, each Report field (e.g., Report #n) is composed of up to four (m=4) quantized SRS-RSRPs. Up to four SRS-RSRPs are arranged in descending order (or ascending order) in the Report field, and SRS resource IDs (SRS Resource indicators in FIG. 13) respectively corresponding to the SRS-RSRPs are stored in the Report field. Further, the Report field includes IDs of SRS resource sets (SRS resource set IDs in FIG. 13) to which SRS resources respectively belong.

For example, the up to four SRS-RSRPs stored in the Report field possibly include SRS-RSRPs of SRS resource sets different from one another, or possibly include SRS-RSRPs of the same SRS resource set.

In configuration method 3-1, for example, the top (or bottom) m SRS-RSRPs among the plurality of measurements (SRS-RSRPs) may be stored (or configured) in the Report field, and the remaining SRS-RSRPs need not be included in the Report field, thereby reducing the number of uplink control information bits and the number of reports.

### <Configuration Method 3-2>

In configuration method 3-2, the Report field is composed of a plurality of average SRS-RSRPs and a plurality of SRS resource set IDs corresponding to the average SRS-RSRPs.

Terminal 200 reports up to m average SRS-RSRPs in descending (or ascending) order. For example, the Report field may store average SRS-RSRP for each of a defined number of m SRS resource sets among SRS resource sets.

The average SRS-RSRP may be found by the average value of SRS-RSRPs of a plurality of (e.g., all) SRS resources in the SRS resource set.

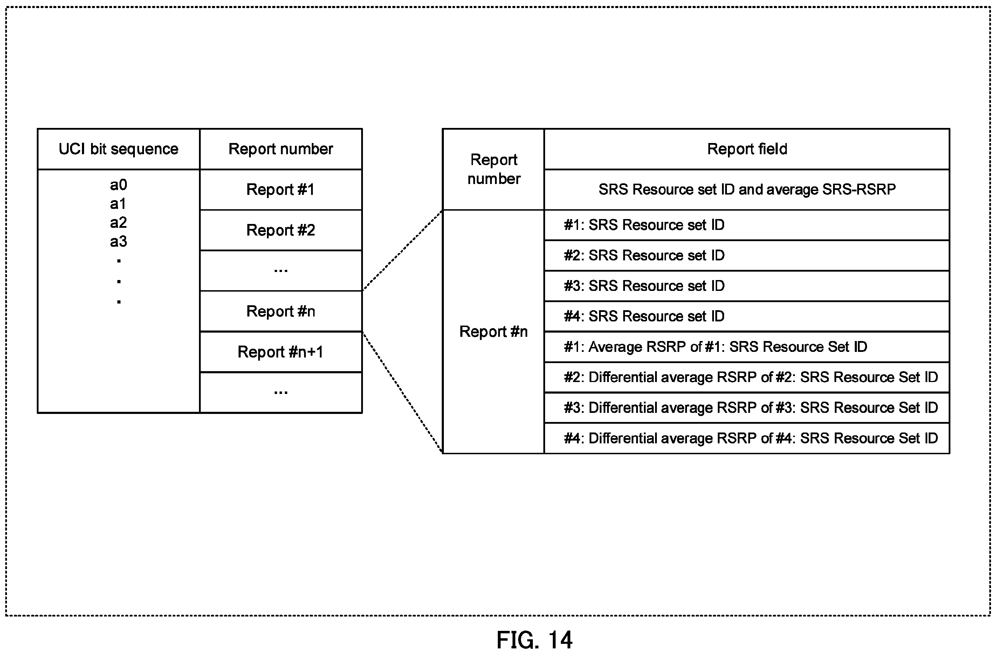

FIG. 14 illustrates an exemplary configuration of a Report field of configuration method 3-2.

An uplink control information (UCI) bit sequence is composed of a plurality of reports. Further, for example, a report number may be assigned in ascending order for each report.

A Report field indicates a bit field of each report. In FIG. 14, each Report field (e.g., Report #n) is composed of up to four (m=4) quantized average SRS-RSRPs. Up to four SRS-RSRPs are arranged in descending order (or ascending order) in the Report field, and the IDs of SRS resources (SRS Resource set IDs in FIG. 14) respectively corresponding to the average SRS-RSRPs are stored (or configured) in the Report field.

In configuration method 3-2, the average SRS-RSRPs are stored in the Report field in an SRS resource set unit, thereby reducing the number of uplink control information bits and the number of reports.

Further, in configuration method 3-2, one average SRS-RSRP may be obtained for each SRS resource set, and thus the Report field is not occupied by SRS-RSRPs of a particular SRS resource set. Further, in configuration method 3-1, in a case where SRS measurement is performed on a plurality of SRS resource sets (SRS resource sets in which a plurality of SRS resources is configured), the Report field is possibly occupied by a plurality of SRS-RSRPs in a particular SRS resource set. However, according to configuration method 3-2, one average SRS-RSRP is obtained for each SRS resource set, so that the Report field is not occupied by a particular SRS resource set.

Note that, in configuration method 3-2, a case has been described in which the Report field stores average SRS-RSRP of each SRS resource set, but the measurement to be stored is not limited to the average value of SRS-RSRP, and may be another measurement (e.g., maximum or minimum value) for each SRS resource set.

### <Configuration Method 3-3>

In configuration method 3-3, the Report field is composed of a plurality of average SRS-RSRPs and a plurality of SRS resource set group IDs corresponding to the average SRS-RSRPs.

Terminal 200 reports up to m average SRS-RSRPs in descending (or ascending) order. For example, the Report field may store average SRS-RSRP for each of a defined number of m SRS resource set groups among a plurality of SRS resource set groups.

The average SRS-RSRP may be found by the average value of SRS-RSRPs of a plurality of (e.g., all) SRS resources in the SRS resource set group, for example.

The SRS resource set group may be composed of a plurality of SRS resource sets.

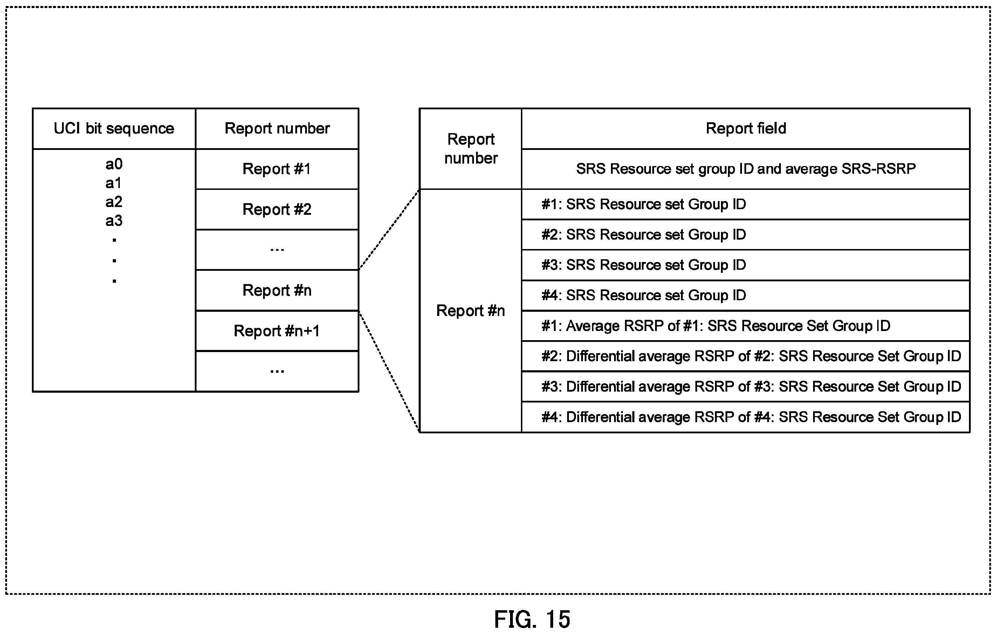

FIG. 15 illustrates an exemplary configuration of a Report field of configuration method 3-3.

An uplink control information (UCI) bit sequence is composed of a plurality of reports. Further, for example, a report number may be assigned in ascending order for each report.

A Report field indicates a bit field of each report. In FIG. 15, each Report field (e.g., Report #n) is composed of up to four (m=4) quantized average SRS-RSRPs. Up to four SRS-RSRPs are arranged in descending order (or ascending order) in the Report field, and the IDs of SRS resource set groups (SRS Resource set group IDs in FIG. 15) respectively corresponding to the SRS-RSRPs are stored (configured) in the Report field.

In configuration method 3-3, the average SRS-RSRP is calculated for each SRS resource set group, thereby reducing the number of uplink control information bits and the number of reports.

Further, for example, in a situation where variation in CLI between terminals is unlikely to change, a long-term CLI report in which a plurality of SRS-RSRPs is averaged may be beneficial to base station 100. For example, in a case where terminal 200 moves slowly, a long-term (averaging) CLI report can reduce the number of reports compared with a short-term (non-averaging) CLI report, thereby effectively using resources. For example, the Report field configuration may be switched between a configuration of storing SRS-RSRPs of all SRS resources constituting an SRS resource set as in configuration method 1 and a configuration of storing an average SRS-RSRP of an SRS resource set group (or SRS resource set) as in configuration method 3 (or configuration method 2).

Note that, in configuration method 3-3, a case has been described in which the Report field stores average SRS-RSRP of each SRS resource set group, but the measurement to be stored is not limited to the average value of SRS-RSRP, and may be another measurement (e.g., maximum or minimum value) for each SRS resource set group.

Configuration methods 1 to 3 for a Report field have been described above.

Note that any of configuration methods 1 to 3 may be combined with one another. For example, by combining configuration methods 2 and 3, the Report field may store a defined number of m measurements of SRS-RSRPs corresponding to the usage of SRS resource set.

As described above, in the present embodiment, base station 100 and terminal 200 determine the configuration of a Report field of the measurement of SRS (e.g., the number of SRS-RSRPs to be reported and the content of the measurement to be reported) based on the configuration of the SRS to be measured.

This makes it possible to configure a Report field considering the configurations of an SRS resource and an SRS resource set (e.g., usage or antenna port), which allows terminal 200 to appropriately report CLI between terminals in an SBFD scenario. Thus, for example, base station 100 can improve the reception characteristic of terminal 200 by scheduling terminal 200 according to the reported SRS-RSRP report.

### (Other Embodiments)

Note that an embodiment of the present disclosure is not limited to a layer 1-based report, and may also be applied to a layer 2-based report that uses Medium access control (MAC) signaling or a layer 3-based report that uses a Radio Resource Control (RRC) message. In a layer 2-based report, the frequency of report is lower than that of a layer 1-based report, but the number of transmittable bits increases. Further, in a layer 3-based report, the function of a reporting method for the existing L3-based SRS-RSRP (e.g., configuration, indication method, or the like) can be reused.

Further, in the above-described embodiment, the measurement and report of short-term interference between terminals are not limited to being applied to the same cell, and can also be applied to a plurality of cells. For example, in a case where communication is performed in different directions in different cells, a terminal at a cell boundary receives CLI from a terminal in a different cell. Thus, the measurement and report of short-term interference between terminals are effective for reducing CLI between terminals in a plurality of cells.

Further, in the above-described embodiment, the reported measurement is not limited to SRS-RSRP, and may be another measurement. For example, the reported measurement may be SRS-Reference Signal Received Quality (RSRQ), and for SRS-RSRQ, the same configuration method for a Report field as SRS-RSRP can be defined.

Furthermore, in the above-described embodiment, the measurement to be reported is not limited to SRS-RSRP, and, for example, the same operation as SRS-RSRP report (configuration method for a Report field) is possible for RSSI. Note that, for RSSI, base station 100 configures a resource to be measured (e.g., Orthogonal Frequency Division Multiplexing (OFDM) symbol and bandwidth to be measured, and the like). Thus, a Report field may be composed of the ID of a resource and RSSI of the resource.

Moreover, in the above-described embodiment, values such as the number of SRS resources in a Report field, the number of bits assigned to SRS-RSRP, and the defined number of m may be merely examples, and are limited to the values described above.

### (Supplement)

Information indicating whether terminal 200 supports the functions, operations, or processes described in the above-described embodiments may be transmitted (or indicated) from terminal 200 to base station 100 as capability information or a capability parameter of terminal 200.

The capability information may include an information element (IE) individually indicating whether terminal 200 supports at least one of the functions, operations, or processes described in the above-described embodiments. Alternatively, the capability information may include an information element indicating whether terminal 200 supports a combination of any two or more of the functions, operations, or processes described in the above-described embodiments.

Base station 100 may determine (or assume) the function, operation, or process supported (or not supported) by terminal 200 of the transmission source of the capability information, based on the capability information received from terminal 200, for example. Base station 100 may perform an operation, processing, or control corresponding to a determination result based on the capability information. For example, base station 100 may control reporting of SRS-RSRP to terminal 200 based on the capability information received from terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

### (Control Signal)

In the present disclosure, the downlink control signal (or downlink control information) related to the exemplary embodiment of the present disclosure may be a signal (or information) transmitted of a Physical Downlink Control Channel (PDCCH) in a physical layer, for example, or may be a signal (or information) transmitted through a Medium Access Control Control Element (MAC CE) of the higher layer or the Radio Resource Control (RRC). Further, the signal (or information) is not limited to being indicated by the downlink control signal, and may be predefined in the specifications (or standard) or may be pre-configured in a base station and a terminal.

In the present disclosure, the uplink control signal (or uplink control information) related to the exemplary embodiment of the present disclosure may be, for example, a signal (or information) transmitted through a PUCCH of the physical layer or a signal (or information) transmitted through a MAC CE of the higher layer or the RRC. In addition, the signal (or information) is not limited to being indicated by the uplink control signal and may be specified by the specifications (or standards) in advance or may be preconfigured in a base station and a terminal. Further, the uplink control signal may be replaced with, for example, uplink control information (UCI), 1st stage sidelink control information (SCI), or 2nd stage SCI.

### (Base Station)

In the above embodiments, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Furthermore, instead of the base station, a relay apparatus that relays communication between a higher node and a terminal may be used. Moreover, a road side device may be used.

### (Uplink/Downlink/Sidelink)

An exemplary embodiment of the present disclosure may be applied to, for example, any of an uplink, a downlink, and a sidelink. For example, an exemplary embodiment of the present disclosure may be applied to uplink channels such as Physical Uplink Shared Channel (PUSCH), Physical Uplink Control Channel (PUCCH), and Physical Random Access Channel (PRACH), downlink channels such as Physical Downlink Shared Channel (PDSCH), PDCCH, and Physical Broadcast Channel (PBCH), or sidelink channels such as Physical Sidelink Shared Channel (PSSCH), Physical Sidelink Control Channel (PSCCH), and Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and PSBCH are examples of broadcast channels, and the PRACH is an example of a random access channel.

### (Data channel/Control channel)

An exemplary embodiment of the present disclosure may be applied to, for example, any of data channels and control channel. For example, the channels in an exemplary embodiment of the present disclosure may be replaced with any of data channels including PDSCH, PUSCH, and PSSCH and/or control channels including PDCCH, PUCCH, PBCH, PSCCH, and PSBCH.

### (Reference Signal)

In an exemplary embodiment of the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In an embodiment of the present disclosure, time resource units are not limited to one or a combination of slots and symbols, and may be time resource units, such as frames, superframes, subframes, slots, time slot subslots, minislots, or time resource units, such as symbols, orthogonal frequency division multiplexing (OFDM) symbols, single carrier-frequency division multiplexing access (SC-FDMA) symbols, or other time resource units. The number of symbols included in one slot is not limited to any number of symbols exemplified in the embodiments described above, and may be other numbers of symbols.

### (Frequency Band)

An exemplary embodiment of the present disclosure may be applied to any of a licensed band and an unlicensed band.

### (Communication)

An exemplary embodiment of the present disclosure may be applied to any of communication between a base station and a terminal (Uu link communication), communication between a terminal and a terminal (Sidelink communication), and communication of a Vehicle to Everything (V2X). For example, the channel in an exemplary embodiment of the present disclosure may be replaced with the PSCCH, the PSSCH, the Physical Sidelink Feedback Channel (PSFCH), the PSBCH, the PDCCH, the PUCCH, the PDSCH, the PUSCH, or the PBCH.

Further, an exemplary embodiment of the present disclosure may be applied to any of a terrestrial network or a network other than a terrestrial network (NTN: Non-Terrestrial Network) using a satellite or a High Altitude Pseudo Satellite (HAPS). In addition, an exemplary embodiment of the present disclosure may be applied to a network having a large cell size, and a terrestrial network with a large delay compared with a symbol length or a slot length, such as an ultra-wideband transmission network.

### (Antenna Port)

In an exemplary embodiment of the present disclosure, the antenna port refers to a logical antenna (antenna group) configured of one or more physical antennae. For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stacks>

3GPP has been working at the next release for the 5th generation cellular technology, simply called 5G, including the development of a new radio (NR) access technology operating in frequencies ranging up to 100 GHz. The first version of 5G standard was initially delivered in late 2017, which allows proceeding to trials and commercial deployments of 5G NR standard-compliant terminals, e.g., smartphones.

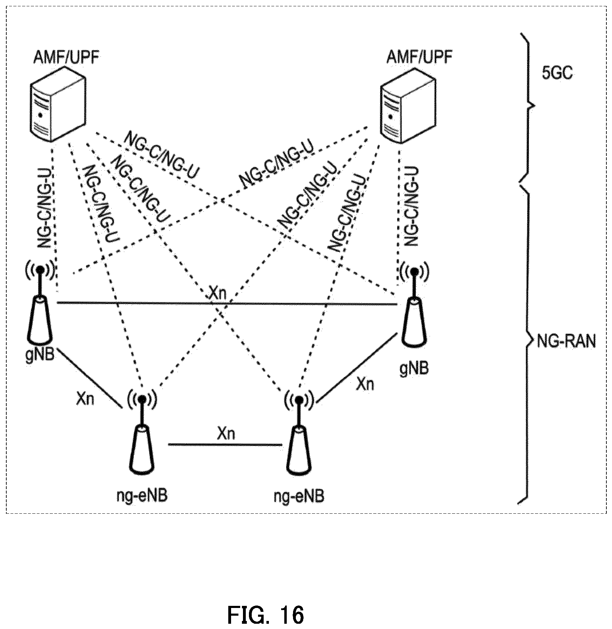

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 16 (see e.g. 3GPP TS 38.300 v15.6.0, section 4).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new access stratum (AS) sublayer (Service Data Adaptation Protocol: SDAP) is introduced above the PDCP (see, e.g., clause 6.5 of 3GPP TS 38.300). A control plane protocol stack is also defined for NR (see, e.g., TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For example, the Medium-Access-Control layer handles logical-channel multiplexing, and scheduling and scheduling-related functions, including handling of different numerologies.

The physical layer (PHY) is, for example, responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, the eMBB is expected to support peak data rates (20 Gbps for downlink and 10 Gbps for uplink) and user-experienced data rates in the order of three times what is offered by IMT-Advanced. Meanwhile, in a case of the URLLC, the tighter requirements are put on ultra-low latency (0.5 ms for each of UL and DL for user plane latency) and high reliability (1-10-5 within 1 ms). Finally, the mMTC may preferably require high connection density (1,000,000 devices/km² in an urban environment), large coverage in harsh environments, and extremely long-life battery for low cost devices (15 years).

Thus, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (also referred to as TTI) than an mMTC service. Furthermore, deployment scenarios with large channel delay spreads may preferably require a longer CP duration than scenarios with short delay spreads. The subcarrier spacing may be optimized accordingly to retain the similar CP overhead. NR may support more than one value of subcarrier spacing. Correspondingly, subcarrier spacing of 15 kHz, 30 kHz, 60 kHz ... are currently considered. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR, for each numerology and carrier, a resource grid of subcarriers and OFDM symbols is defined for each of uplink and downlink. Each element in the resource grid is called a resource element and is identified based on the frequency index in the frequency domain and the symbol position in the time domain (see 3GPP TS 38.211 v15.6.0).

### <5G NR Functional Split between NG-RAN and 5GC>

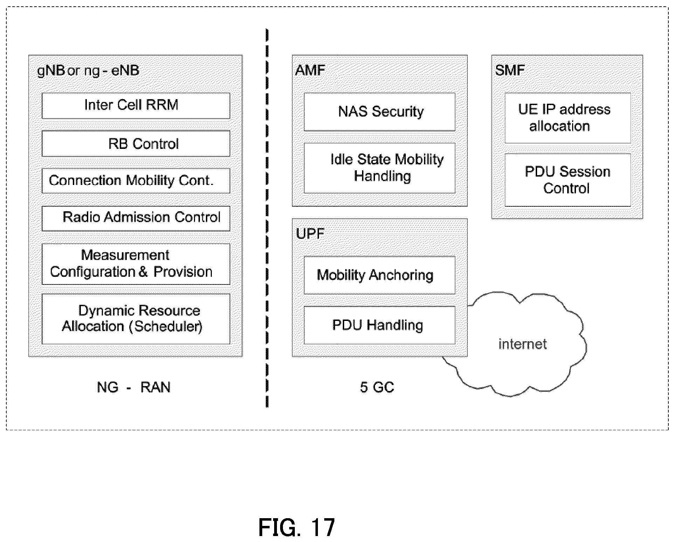

FIG. 17 illustrates functional split between NG-RAN and 5GC. An NG-RAN logical node is a gNB or ng-eNB. The 5GC has logical nodes AMF, UPF, and SMF.

For example, the gNB and ng-eNB host the following main functions:
- Functions for radio resource management such as radio bearer control, radio admission control, connection mobility control, dynamic allocation (scheduling) of resources to UEs in both uplink and downlink;
- IP header compression, encryption, and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session management;
- Support of network slicing;
- QoS Flow management and mapping to data radio bearers;
- Support of UEs in RRC_INACTIVE state;
- Distribution function for NAS messages;
- Radio access network sharing;
- Dual Connectivity; and
- Tight interworking between NR and E-UTRA.

The access and mobility management function (AMF) hosts the following main functions:
- Non-Access Stratum (NAS) signaling termination function;
- NAS signaling security;
- Access Stratum (AS) security control;
- Inter Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Furthermore, the user plane function (UPF) hosts the following main functions:
- Anchor point for intra-/inter-RAT mobility (when applicable);
- External protocol data unit (PDU) session point of interconnect to a data network;
- Packet routing and forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane (e.g. packet filtering, gating, and UL/DL rate enforcement);
- Uplink traffic verification (SDF to QoS flow mapping); and
- Downlink packet buffering and downlink data indication triggering.

Finally, the session management function (SMF) hosts the following main functions:
- Session management;
- UE IP address allocation and management;
- Selection and control of UPF;
- Configuration function of traffic steering at a user plane function (UPF) to route traffic to proper destination;
- Control part of policy enforcement and QoS; and
- Downlink data indication.

### <RRC Connection Setup and Reconfiguration Procedures>

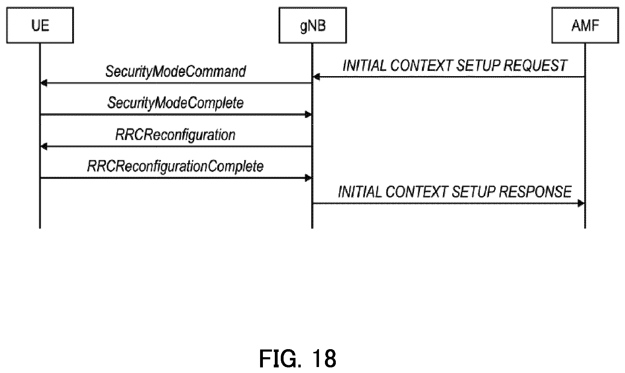

FIG. 18 illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. This transition involves that the AMF prepares the UE context data (including, for example, PDU session context, security key, UE radio capability, and UE security capabilities, etc.) and transmits the UE context data to the gNB with an INITIAL CONTEXT SETUP REQUEST. Then, the gNB activates the AS security with the UE, which is performed by the gNB transmitting a SecurityModeCommand message to the UE and by the UE responding to the gNB with a SecurityModeComplete message. Afterwards, the gNB performs the reconfiguration to set up the Signaling Radio Bearer 2 (SRB2) and Data Radio Bearer(s) (DRB(s)) by transmitting an RRCReconfiguration message to the UE and, in response, receiving an RRCReconfigurationComplete from the UE. For a signaling-only connection, the steps relating to the RRCReconfiguration are skipped since the SRB2 and DRBs are not setup. Finally, the gNB indicates to the AMF that the setup procedure is completed with an INITIAL CONTEXT SETUP RESPONSE.

In the present disclosure, thus, an entity (e.g., AMF, SMF, etc.) of the 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and user equipment (UE). In particular, the gNodeB transmits a radio resource control (RRC) signaling containing a resource allocation configuration information element (IE) to the UE via the signaling radio bearer. The UE then performs an uplink transmission or a downlink reception based on the resource allocation configuration.

### <Usage Scenarios of IMT for 2020 and beyond>

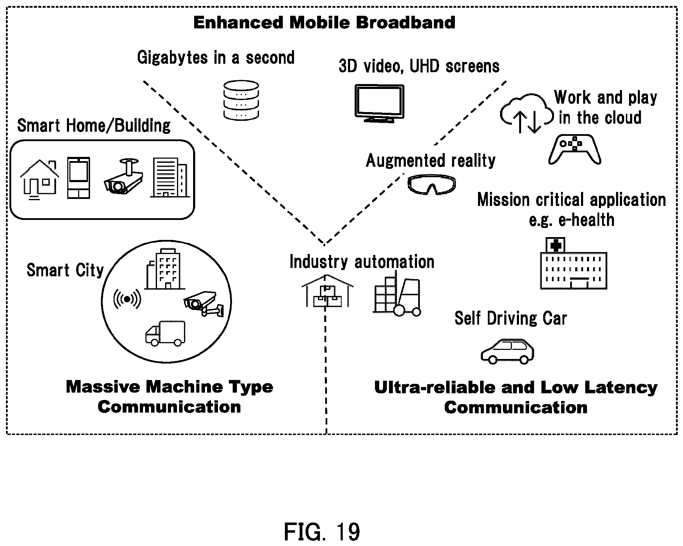

FIG. 19 illustrates some of the use cases for 5G NR. In the 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 19 illustrates some examples of envisioned usage scenarios for IMT for 2020 and beyond (see, e.g., ITU-R M. 2083 FIG. 2).

The URLLC use case has stringent requirements for capabilities such as throughput, latency, and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by identifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of the mMTC (massive machine type communication) is characterized by a very large number of connected devices typically transmitting a relatively low volume of non-delay sensitive data. Devices are required to be low cost and to have a very long battery life. From the NR perspective, utilizing very narrow bandwidth parts is one possible solution to have power saving from the UE perspective and enable the long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10-6 level), higher availability, packet size of up to 256 bytes, time synchronization down to the order of a few µs where the value can be one or a few µs depending on frequency range and short latency in the order of 0.5 to 1 ms (e.g., target user plane latency of 0.5 ms) depending on the use cases.

Moreover, for NR URLLC, several technology enhancements from the physical layer perspective have been identified. These technology enhancements include Physical Downlink Control Channel (PDCCH) enhancements related to compact DCI, PDCCH repetition, and increased PDCCH monitoring. In addition, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements have been identified. The term "mini-slot" refers to a transmission time interval (TTI) including a smaller number of symbols than a slot (a slot includes fourteen symbols).

### <QoS Control>

The 5G Quality of Service (QoS) model is based on QoS flows and supports both QoS flows that require guaranteed flow bit rate (GBR QoS flows) and QoS flows that do not require guaranteed flow bit rate (non-GBR QoS Flows). At the NAS level, the QoS flow is thus the finest granularity of QoS differentiation in a PDU session. A QoS flow is identified within a PDU session by a QoS flow ID (QFI) carried in an encapsulation header over the NG-U interface.

For each UE, the 5GC establishes one or more PDU sessions. For each UE, the NG-RAN establishes at least one Data Radio Bearer (DRB) together with the PDU session, for example as illustrated above with reference to FIG. 18. Additional DRB(s) for QoS flow(s) of that PDU session can be subsequently configured (it is up to NG-RAN when to do so). The NG-RAN maps packets belonging to different PDU sessions to different DRBs. NAS level packet filters in the UE and 5GC associate UL and DL packets with QoS flows, whereas AS-level mapping rules in the UE and in the NG-RAN associate UL and DL QoS flows with DRBs.

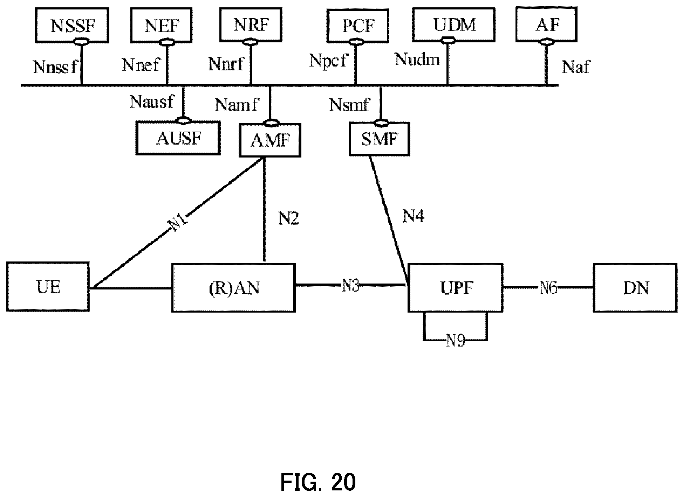

FIG. 20 illustrates a 5G NR non-roaming reference architecture (see TS 23.501 v16.1.0, section 4.23). An Application Function (AF, e.g., an external application server hosting 5G services exemplified in FIG. 19) interacts with the 3GPP core network in order to provide services, for example, to support application influence on traffic routing, accessing a Network Exposure Function (NEF) or interacting with the policy framework for policy control (see Policy Control Function, PCF), e.g., QoS control. Based on operator deployment, application functions considered to be trusted by the operator can be allowed to interact directly with relevant network functions. Application functions not allowed by the operator to access directly the network functions use the external exposure framework via the NEF to interact with relevant network functions.

FIG. 20 illustrates further functional units of the 5G architecture, namely a Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture) is provided that includes a transmitter, which in operation, transmits a request containing a QoS requirement for at least one of the URLLC, eMMB, and mMTC services to at least one of functions (for example NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

The technique of implementing an integrated circuit is not limited to the LSI, however, and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an embodiment of the present disclosure includes: control circuitry, which, in operation, determines, based on a configuration of a reference signal to be measured, at least one of a number of measurements and/or a content of a measurement, the measurements and the measurement being included in a report field of measurement of the reference signal; and transmission circuitry, which, in operation, transmits a signal including at least one of the measurements based on at least one of the determined number and content.

In the embodiment of the present disclosure, the report field stores the measurements respectively of a plurality of resources constituting one resource set for the reference signal.

In the embodiment of the present disclosure, the content of the measurement included in the report field varies depending on a usage of a resource set of the reference signal.

In the embodiment of the present disclosure, the report field stores a specified number of measurements among the measurements of a plurality of resources for the reference signal.

In the embodiment of the present disclosure, the report field stores the specified number of measurements in descending or ascending order among the measurements of the plurality of resources included in a plurality of resource set for the reference signal.

In the embodiment of the present disclosure, the report field stores an average value of the measurements for each of the specified number of resource sets among a plurality of resource sets for the reference signal.

In the embodiment of the present disclosure, the report field stores an average value of the measurements for each of the specified number of groups among a plurality of groups of resource sets for the reference signal.

A base station according to an embodiment of the present disclosure includes: control circuitry, which, in operation, determines, based on a configuration of a reference signal measured by a terminal, at least one of a number of measurements and/or a content of a measurement, the measurements and the measurement being included in a report field of measurement of the reference signal; and reception circuitry, which, in operation, receives a signal including at least one of the measurements based on at least one of the determined number and content.

In a communication method according to an embodiment of the present disclosure, a terminal determines, based on a configuration of a reference signal to be measured, at least one of a number of measurements and/or a content of a measurement, the measurements and the measurement being included in a report field of measurement of the reference signal, and transmits a signal including at least one of the measurements based on at least one of the determined number and content.

In a communication method according to an embodiment of the present disclosure, a base station determines, based on a configuration of a reference signal measured by a terminal, at least one of a number of measurements and/or a content of a measurement, the measurements and the measurement being included in a report field of measurement of the reference signal, and receives a signal including at least one of the measurements based on at least one of the determined number and content.

The disclosure of Japanese Patent Application No. 2022-124290, filed on August 3, 2022, including the specification, drawings and abstract, is incorporated herein by reference in its entirety.

### Industrial Applicability

An exemplary embodiment of the present disclosure is useful for radio communication systems.

### Reference Signs List

100 Base station
101, 201 Receiver
102, 202 Demodulator/decoder
103 Inter-terminal CLI determiner
104 Scheduler
105, 205 Information holder
106, 207 Data/control information generator
107, 208 Encoder/modulator
108, 209 Transmitter
200 Terminal
203 SRS Receiver
204 Transmission controller
206 SRS generator

## Claims

1. A terminal, comprising:
control circuitry, which, in operation, determines, based on a configuration of a reference signal to be measured, at least one of a number of measurements and/or a content of a measurement, the measurements and the measurement being included in a report field of measurement of the reference signal; and
transmission circuitry, which, in operation, transmits a signal including at least one of the measurements based on at least one of the determined number and content.

2. The terminal according to claim 1, wherein
the report field stores the measurements respectively of a plurality of resources constituting one resource set for the reference signal.

3. The terminal according to claim 1, wherein
the content of the measurements included in the report field varies depending on a usage of a resource set of the reference signal.

4. The terminal according to claim 1, wherein
the report field stores a specified number of measurements among the measurements of a plurality of resources for the reference signal.

5. The terminal according to claim 4, wherein
the report field stores the specified number of measurements in descending or ascending order among the measurements of the plurality of resources included in a plurality of resource set for the reference signal.

6. The terminal according to claim 4, wherein
the report field stores an average value of the measurements for each of the specified number of resource sets among a plurality of resource sets for the reference signal.

7. The terminal according to claim 4, wherein
the report field stores an average value of the measurements for each of the specified number of groups among a plurality of groups of resource sets for the reference signal.

8. A base station, comprising:
control circuitry, which, in operation, determines, based on a configuration of a reference signal measured by a terminal, at least one of a number of measurements and/or a content of a measurement, the measurements and the measurement being included in a report field of measurement of the reference signal; and
reception circuitry, which, in operation, receives a signal including at least one of the measurements based on at least one of the determined number and content.

9. A communication method, comprising:
determining, by a terminal, based on a configuration of a reference signal to be measured, at least one of a number of measurements and/or a content of a measurement, the measurements and the measurement being included in a report field of measurement of the reference signal; and
transmitting, by the terminal, a signal including at least one of the measurements based on at least one of the determined number and content.

10. A communication method, comprising:
determining, by a base station, based on a configuration of a reference signal measured by a terminal, at least one of a number of measurements and/or a content of a measurement, the measurements and the measurement being included in a report field of measurement of the reference signal; and
receiving, by the base station, a signal including at least one of the measurements based on at least one of the determined number and content.
